# EUROPEAN PATENT APPLICATION

(11) **EP 3 785 979 A1**
(43) Date of publication of application: **03.03.2021**
(21) Application number: 20192131.9
(22) Date of filing: 21.08.2020
(51) Int. Cl.: B60L 53/22, H02J 7/00

(54) **SYSTEMS AND METHODS FOR SMOOTH START UP OF VEHICLE ONBOARD BATTERY CHARGER**

(30) Priority: 28.08.2019 US 201916553936
(71) Applicant: Delphi Automotive Systems Luxembourg SA, 4940 Bascharage (LU)
(72) Inventor: ENGEL, Joseph, A., L-4671 Differdange (LU)
(74) Representative: Delphi France SAS

(57) **Abstract**

A method (400) for a battery charger circuit (200) of a vehicle (10) includes measuring (402) a first voltage value on a first side of a relay (220) that is connected to an incoming alternating current source (202). The method (400) also includes measuring (404) a second voltage value on a second side of the relay (220) that is connected to the battery charger circuit (200). The method (400) also includes determining (406) whether a difference between the first voltage value and the second voltage value is greater than a threshold. The method (400) also includes, in response to a determination that the difference between the first voltage value and the second voltage value is greater than the threshold, charging (408) one or more capacitors (on the second side of the relay (220).

## Description

### TECHNICAL FIELD

This disclosure relates to vehicle onboard battery chargers and in particular to systems and methods for smooth start up of vehicle onboard battery chargers.

### BACKGROUND

Vehicles, such as cars, trucks, sport utility vehicles, crossovers, mini-vans, or other suitable vehicles, include a powertrain system that includes, for example, a propulsion unit, a transmission, drive shafts, wheels, and other suitable components. The propulsion unit may include an internal combustion engine, a fuel cell, one or more electric motors, and the like. A hybrid vehicle may include a powertrain system comprising more than one propulsion unit. For example, a hybrid vehicle may include an internal combustion engine and an electric motor that cooperatively operate to propel the vehicle.

In an electric powered vehicle, such as a hybrid vehicle or purely electric vehicle, one or more batteries supply power to one or more electric motors of the electric powered vehicle. Such batteries are typically charged when the electric power vehicle is not in use. For example, an operator of the electric powered vehicle may connect the vehicle to an electric grid (e.g., through a wall outlet in a home or other suitable connection to the electric grid). The electric grid may supply power to a battery charger circuit, which controls power flow to the one or more batteries in order to recharge the batteries.

### SUMMARY

This disclosure relates generally to vehicle onboard battery charger systems and methods.

An aspect of the disclosed embodiments is a method for a battery charger circuit of a vehicle. The method includes measuring a first voltage value on a first side of a relay that is connected to an incoming alternating current source. The method also includes measuring a second voltage value on a second side of the relay that is connected to the battery charger circuit. The method also includes determining whether a difference between the first voltage value and the second voltage value is greater than a threshold. The method also includes, in response to a determination that the difference between the first voltage value and the second voltage value is greater than the threshold, charging one or more capacitors on the second side of the relay.

Another aspect of the disclosed embodiments is an apparatus for a battery charger circuit that includes a memory and a processor. The processor is configured to execute instructions stored on the memory to: measure a first voltage value on a first side of a relay that is connected to an incoming alternating current source; measure a second voltage value on a second side of the relay that is connected to the battery charger circuit; determine whether a difference between the first voltage value and the second voltage value is greater than a threshold; and in response to a determination that the difference between the first voltage value and the second voltage value is greater than the threshold, charge one or more capacitors on the second side of the relay.

Another aspect of the disclosed embodiments is a non-transitory computer-readable storage medium includes executable instructions that, when executed by a processor, facilitate performance of operations, comprising: identifying a relay of a plurality of relays that closes first in a battery charger circuit; measuring a first voltage value on a first side of the relay that is connected to an incoming alternating current source; measuring a second voltage value on a second side of the relay that is connected to the battery charger circuit; determining whether a difference between the first voltage value and the second voltage value is greater than a threshold; and in response to a determination that the difference between the first voltage value and the second voltage value is greater than the threshold, charging one or more capacitors on the second side of the relay to a voltage value within a range of the first voltage value.

These and other aspects of the present disclosure are provided in the following detailed description of the embodiments, the appended claims, and the accompanying figures.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 generally illustrates a vehicle according to the principles of the present disclosure.
FIGS. 2A-2C generally illustrate various battery charger circuit diagrams according to the principles of the present disclosure.
FIG. 3A generally illustrates three-phase electrical system according to the principles of the present disclosure.
FIG. 3B generally illustrates a split-phase electrical system
FIG. 4 is a flow diagram generally illustrating a battery charger circuit start up method according to the principles of the present disclosure.

### DETAILED DESCRIPTION

The following discussion is directed to various embodiments of the invention. Although one or more of these embodiments may be preferred, the embodiments disclosed should not be interpreted, or otherwise used, as limiting the scope of the disclosure, including the claims. In addition, one skilled in the art will understand that the following description has broad application, and the discussion of any embodiment is meant only to be exemplary of that embodiment, and not intended to intimate that the scope of the disclosure, including the claims, is limited to that embodiment.

Vehicles, such as cars, trucks, sport utility vehicles, crossovers, mini-vans, or other suitable vehicles, include a powertrain system that includes, for example, a propulsion unit, a transmission, drive shafts, wheels, and other suitable components. The propulsion unit may include an internal combustion engine, a fuel cell, one or more electric motors, and the like. A hybrid vehicle may include a powertrain system comprising more than one propulsion unit. For example, a hybrid vehicle may include an internal combustion engine and an electric motor that cooperatively operate to propel the vehicle.

In an electric powered vehicle, such as a hybrid vehicle or purely electric vehicle, one or more batteries supply power to one or more electric motors (e.g., and various other components) of the electric powered vehicle. Such batteries are typically charged when the electric power vehicle is not in use. An operator of the electric powered vehicle may connect the vehicle to an electric grid. For example, the operator may connect a power cable to a wall outlet in a home, commercial location, or other suitable location to connect to the electric grid. The electric grid supplies alternating current power, which is converted to a set alternating current voltage at the wall outlet (e.g., 110 volts, 120 volts, 220 volts, 230 volts, or other suitable voltage value, which may vary based on region). The wall outlet, using power from the electric grid, supplies power to a battery charger circuit, which controls power flow to the one or more batteries in order to recharge the batteries.

Typically, a battery charger circuit may include one or more relays that separate the incoming alternating current source from power lines of the battery charger circuit. During start up of the battery charger circuit (e.g., when power is provided to the battery charger circuit to charge the one or more batteries of the vehicle), one or more of the relays close, which provides power from the incoming alternating current source to the battery charger circuit, which is then used to charge the battery of the vehicle. Such systems typically include one or more capacitors disposed on a vehicle side of the one or more relays (e.g., on a side of the one or more relays opposite the incoming alternating current source) because of filtering requirements. The one or more capacitors may be connected between a respective power line of the battery charger circuit and ground (e.g., or earth) or chassis. When the one or more relays close, there may be an initial current spike in the battery charger circuit. Such a current spike may be proportional to a value of the power line to ground capacitance (e.g., a sum of the capacitance of the one or more capacitors of the vehicle that can be considered as being connected to the chassis) and a voltage difference and inverse proportional to an impedance in the path of the battery charger circuit.

The current spike in the battery charger circuit may trigger various protection devices in the vehicle (e.g., in the battery charger circuit or other electrically connected portions of the vehicle) that are sensitive to leakage currents between the power lines of the battery charger circuit and the ground or chassis. Triggering the protection devices may result in power loss to the battery charger circuit, system shutdown, or other undesirable features. Typically, in order to prevent such a current spike, systems include various resistors that are connected in series prior to closing the one or more relays and typically adjust voltage values on both sides of the one or more relays with a relatively small amount of current. Other typical systems may include a diode that engages at a low voltage across the one or more relays and may track for a short time prior to the one or more relays closing. However, such systems typically include additional hardware components, which may add additional manufacturing complexity and/or costs. Accordingly, systems and methods, such as those described herein, configured to prevent such a current spike (e.g., and prevent triggering of the protection devices), without additional hardware may be desirable.

In some embodiments, the systems and methods described herein may include using low power source to adjust a charge in the one or more capacitors of the vehicle based on sensing (e.g., using voltage sensing components available in the vehicle for various voltage sensing purposes) a voltage difference across the one or more relay contacts. In some embodiments, the low power source may be shared with other functions of the vehicle, such as alternating current leakage compensation when a connection point of the low power source is disposed "downstream" of the contacts. Additionally, or alternatively, the power path may be shared with other functions linked to power conversion in the onboard battery charger. The one or more relays, passive devices, and active devices may be arranged in a manner typically referred to as rectifier stage and power factor correction stage or boost stage.

In some embodiments, the systems and methods described herein may include using a combination of one or more high power sources and one or more low power sources to adjust a charge in the one or more capacitors of the vehicle based on sensing (e.g., using voltage sensing components available in the vehicle for various voltage sensing purposes) a voltage difference across the one or more relays (e.g., across one or more relay contacts associated with the one or more relays), assisted by passive devices, active devices, or a combination thereof (e.g., MOS FETs and/or DIODES). Alternating voltage values are sensed by the voltage sensing devices upstream the one or more relays. An incoming voltage wave is analyzed and a period for a positive wave and a negative wave are defined. Upon entering into the identified period, the relay and active devices in the power path are engaged in a manner that the resulting current is not a switch related inrush but a smooth transition initiated by the voltage transitions between a first period and a second period. The resulting current values are applied to the one or more capacitors and charge the one or more capacitors by tracking their voltage as of 0V difference across an associated diode. The resulting current value is within the capabilities of the one or more low power source.

In some embodiments, the systems and methods described herein include measuring a first voltage value on a first side of a relay that is connected to the incoming alternating current source. The systems and methods described herein include measuring a second voltage value on a second side of the relay that is connected to the battery charger circuit. The systems and methods described herein include determining whether a difference between the first voltage value and the second voltage value is greater than a threshold. When the difference between the first voltage value and the second voltage value is greater than the threshold, the systems and methods described herein include charging (e.g., adjusting the voltage of) one or more capacitors on the second side of the relay. In some embodiments, the systems and methods described herein may be configured to reduce and/or prevent a current spike from occurring in the battery charger circuit may adjusting the voltage values of the capacitors of the vehicle, such that the total voltage value of the capacitors of the vehicle substantially equals the voltage value of the incoming alternating current source (e.g., voltage values on each side of a respective relay are substantially equal).

In some embodiments, the incoming alternating current source includes a three-phase alternating current source, a split-phase alternating current source, or other suitable alternating current source. In some embodiments, the incoming alternating current source is associated with an alternating current grid, such as the electric grid. In some embodiments, the relay is one of a plurality of relays, as described. In some embodiments, the relay closes before other relays of the plurality of relays. In some embodiments, charging the one or more capacitors on the second side of the relay includes charging the one or more capacitors on the second side of the rely to a voltage value within a range of the first voltage value.

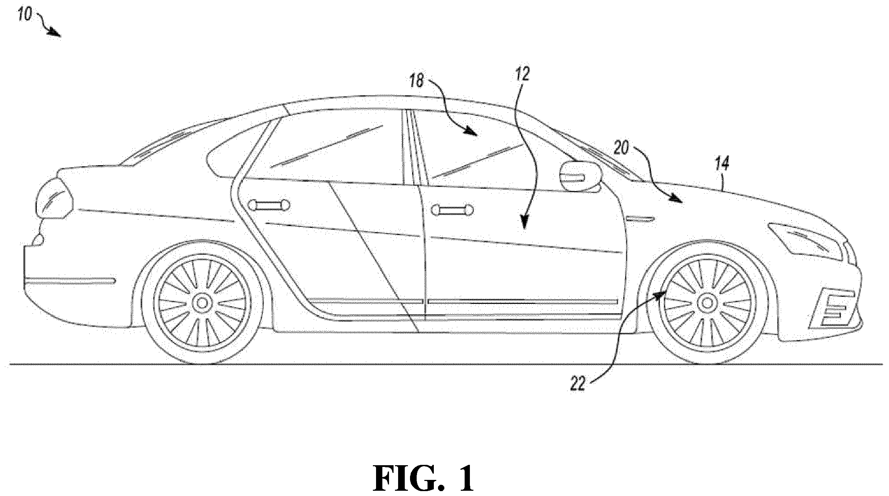

FIG. 1 generally illustrates a vehicle 10 according to the principles of the present disclosure. The vehicle 10 may include any suitable vehicle, such as a car, a truck, a sport utility vehicle, a mini-van, a crossover, any other passenger vehicle, any suitable commercial vehicle, or any other suitable vehicle. While the vehicle 10 is illustrated as a passenger vehicle having wheels and for use on roads, the principles of the present disclosure may apply to other vehicles, such as planes, boats, trains, drones, or other suitable vehicles. The vehicle 10 includes a vehicle body 12 and a hood 14. A portion of the vehicle body 12 defines a passenger compartment 18. Another portion of the vehicle body 12 defines the engine compartment 20. The hood 14 may be moveably attached to a portion of the vehicle body 12, such that the hood 14 provides access to the engine compartment 20 when the hood 14 is in a first or open position and the hood 14 covers the engine compartment 20 when the hood 14 is in a second or closed position.

The passenger compartment 18 may be disposed rearward of the engine compartment 20. The vehicle 10 may include any suitable propulsion system including an internal combustion engine, one or more electric motors (e.g., an electric vehicle), one or more fuel cells, a hybrid (e.g., a hybrid vehicle) propulsion system comprising a combination of an internal combustion engine, one or more electric motors, and/or any other suitable propulsion system. In some embodiments, the vehicle 10 may include a petrol or gasoline fuel engine, such as a spark ignition engine. In some embodiments, the vehicle 10 may include a diesel fuel engine, such as a compression ignition engine. The engine compartment 20 houses and/or encloses at least some components of the propulsion system of the vehicle 10. Additionally, or alternatively, propulsion controls, such as an accelerator actuator (e.g., an accelerator pedal), a brake actuator (e.g., a brake pedal), a steering wheel, and other such components are disposed in the passenger compartment 18 of the vehicle 10. The propulsion controls may be actuated or controlled by a driver of the vehicle 10 and may be directly connected to corresponding components of the propulsion system, such as a throttle, a brake, a vehicle axle, a vehicle transmission, and the like, respectively. In some embodiments, the propulsion controls may communicate signals to a vehicle computer (e.g., drive by wire) which in turn may control the corresponding propulsion component of the propulsion system.

In some embodiments, the vehicle 10 includes a transmission in communication with a crankshaft via a flywheel, clutch, or fluid coupling. In some embodiments, the transmission includes a manual transmission. In some embodiments, the transmission includes an automatic transmission. The vehicle 10 may include one or more pistons, in the case of an internal combustion engine or a hybrid vehicle, which cooperatively operate with the crankshaft to generate force, which is translated through the transmission to one or more axles, which turns wheels 22.

When the vehicle 10 includes one or more electric motors, a vehicle battery, and/or fuel cell provides energy to the electric motors to turn the wheels 22. In cases where the vehicle 10 includes a vehicle battery to provide energy to the one or more electric motors, when the battery is depleted, it may be connected to an electric grid (e.g., using a wall socket) to recharge the battery cells. Additionally, or alternatively, the vehicle 10 may employ regenerative braking which uses the one or more electric motors of the vehicle 10 as a generator to convert kinetic energy lost due to decelerating back into stored energy in the battery.

The vehicle 10 may include automatic vehicle propulsion systems, such as a cruise control, an adaptive cruise control module or mechanism, automatic braking control, other automatic vehicle propulsion systems, or a combination thereof. The vehicle 10 may be an autonomous or semi-autonomous vehicle, or other suitable type of vehicle. The vehicle 10 may include additional or fewer features than those generally illustrated and/or disclosed herein.

As described the vehicle 10 may include an electric powered vehicle, such as a hybrid vehicle or a purely electric vehicle. The vehicle 10, as described, may include one or more electric motors that receive power or energy from one or more batteries within the vehicle. The one or more batteries may include or be connected to respective vehicle onboard battery charger that provide power to respective batteries to recharge the respective batteries for use.

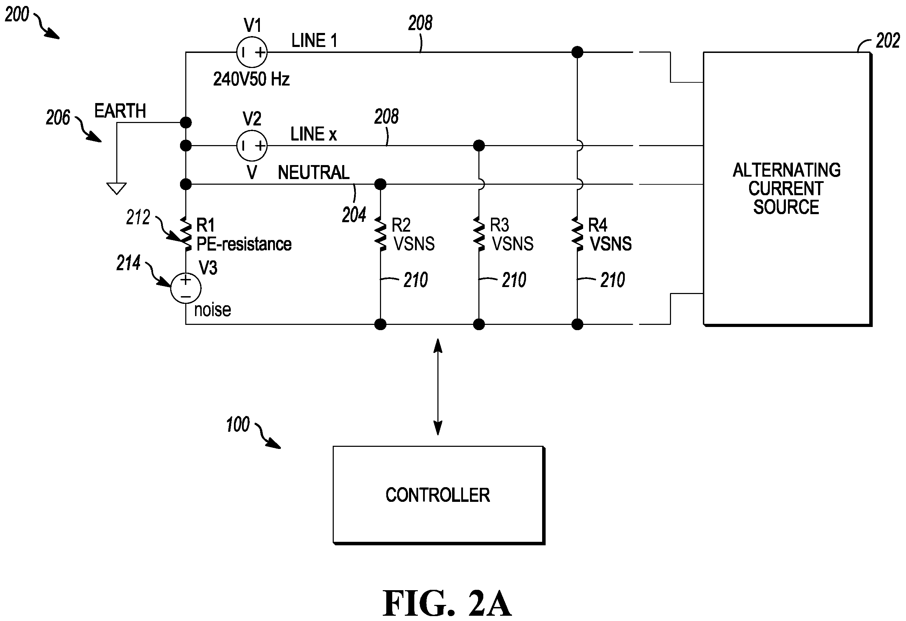

FIG. 2A generally illustrates a battery charger circuit 200 in communication with a controller 100. The controller 100 may be any suitable controller within the vehicle, such as an electric control unit, a vehicle control unit, or other suitable vehicle onboard controller. The controller 100 may include a processor and a memory. The memory may be configured to store instructions executable by the processor. For example, the processor may execute the instructions stored memory to perform various functions and methods described herein. The controller 100 may be configured to control various aspects of the vehicle. For example, the controller 100 may be configured to reduce or prevent current spikes in the battery charger circuit 200 during startup of the battery charger circuit 200 (e.g., a smooth start up).

As described, the battery charger circuit 200 may be associated with an onboard battery charger that supplies power to a respective battery of the vehicle 10 for recharging the respective battery. The battery charger circuit 200 may be connected to an alternating current source 202. The alternating current source 202 may include a wall outlet connected to an electric grid, as described. The alternating current source 202 provides alternating current power to the battery charger circuit 200. The battery charger circuit 200 may connect the alternating current power to various suitable power and may provide the power to the one or more batteries of the vehicle 10.

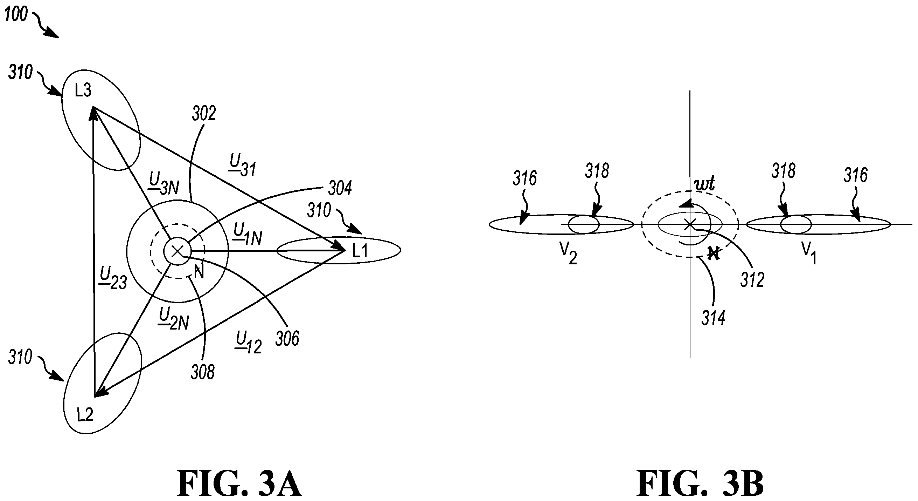

The alternating current source 202 may include any suitable phase type or scheme. For example, FIG. 3A generally illustrates a three-phase power source scheme and FIG. 3B generally illustrates a split-phase power source scheme. It should be understood that the alternating current source 202 may include any suitable phase type power source scheme.

In some embodiments, the controller 100 is configured to determine scheme of the alternating current source 202. For example, the controller 100 may receive the scheme of the alternating current source 202 from a user or operator of the vehicle via an input device of the vehicle. Additionally, or alternatively, the controller 100 may be configured to determine the scheme based on the amplitude of the incoming power from the alternating current source 202, the connection type of the alternating current source 202, other characteristics of the alternating current source 202, or a combination thereof. In some embodiments, the controller 100 may communicate with a remotely located computing device, such as a cloud-computing device or other suitable remotely located computing device, to obtain or receive the scheme of the alternating current source 202. In some embodiments, the scheme may be indicated by an industrial standard, which may be received or obtained by the controller 100, as described.

With referenced to FIG. 3A, an expected range for neutral line of the alternating current source 202 is illustrated at 302. The neutral line of the alternating current source 202 may be connected to a neutral line 204 of the battery charger circuit 200. An actual (e.g., measured) range for the neutral line of the alternating current source 202 prior to an on state of the alternating current source 202 is illustrated at 304. The on state may include a state of alternating current source 202 corresponding to the alternating current source 202 providing power to the battery charger circuit 200 (e.g., in response to the battery charger circuit 200 being turned on to charge the battery). As described, the battery charger circuit 200 includes a protective earth connection 206. The protective earth connection 206 may be connected to an earth connection of the alternating current source 202. The earth connection expected voltage value range is illustrated at 306.

An acceptable voltage value limit (e.g., when the alternating current source 202 is in the on state) is illustrated at 308. The battery charger circuit 200 includes one or more lines 208. The one or more lines 208 may be connected to corresponding supply lines of the alternating current source 202. An expected voltage value range for supply lines associated with the alternating current source 202 is illustrated at 310. As described, the alternating current source 202 may include any suitable number of supply lines.

As described, FIG. 3B generally illustrates a split-phase scheme of the alternating current source 202. The battery charger circuit 200 may be connected to alternating current source 202 when the alternating current source 202 includes a split-phase scheme in a similar manner as described above with respect to FIG. 3A. An earth connection voltage value range is illustrated at 312 and may be similar or different from the earth connection voltage value range 306. An acceptable voltage value limit (e.g., when the alternating current source 202 is in the on state) is illustrated at 314 and may be similar or different from the acceptable voltage value limit 308. An expected voltage value range for supply lines associated with the alternating current source 202 is illustrated at 316 and may be similar or different from the expected voltage value range for supply lines 310. An actual (e.g., measured) voltage value range for the supply lines of the alternating current source 202 is illustrated at 318. The split-phase scheme does not typically include a neutral line. Accordingly, the controller 100 may derive a virtual neutral relative to the chassis of the vehicle. The controller 100 may derive the virtual neutral using the supply line voltages from the alternating current source 202.

In some embodiments, the alternating current source 202 may include a power source scheme that includes power lines that are isolated from the earth (e.g., ground) and the connection between the vehicle 10 and the protective earth connection 206.

The battery charger circuit 200 includes various resistors 210. In some embodiments, the battery charger circuit 200 includes a protective earth connection resistor 212. The battery charger circuit 200 may include noise 214 that may be caused by various components in the battery charger circuit 200, the alternating current source 202, the battery, or other components of the vehicle 10. The noise 214 may influence measurements taken by the controller 100 of the battery charger circuit 200.

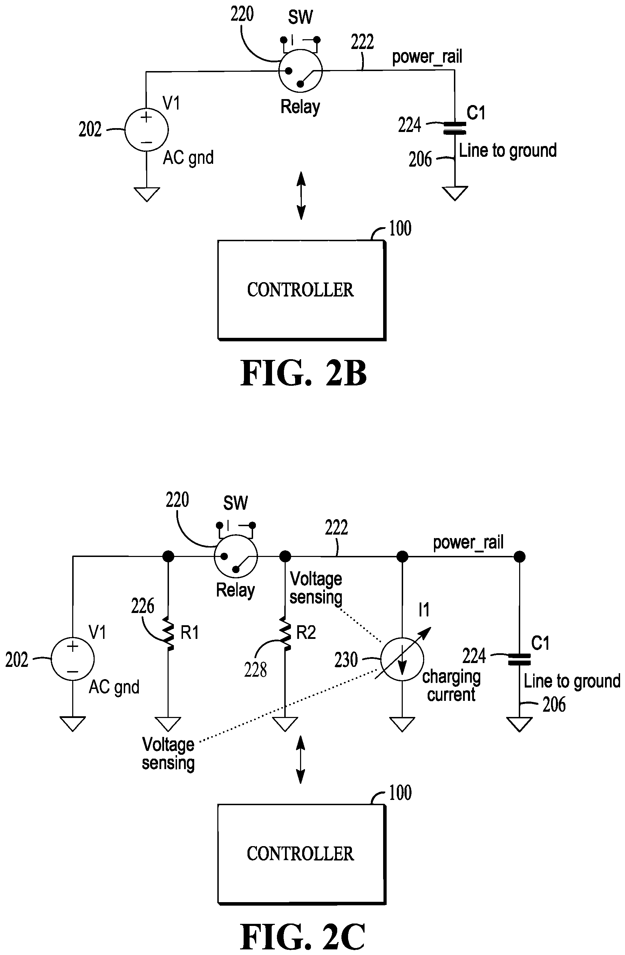

With references to FIG. 2B, simplified schematic of the battery charger circuit 200 is generally illustrated. As described, the battery charger circuit 200 may include one or more relays 220. While only one relay 220 is illustrated, it is understood that the battery charger circuit 200 may include any suitable number of relays 220. The relay 220 may include a relay configured to close before other relays of the battery charger circuit 200. The relay 220 may include any suitable relay and may be connected on a first side to the incoming alternating current source 202 and connected on a second side to a power line 222 of the battery charger circuit 200. The power line 222 may be any line of the battery charger circuit 200, as described. In some embodiments, the power line 222 may represent all power lines or a power rail of the battery charger circuit 200. The power line 222 may be connected to one or more capacitors, such as the capacitor 224. The capacitor 224 is representative of all of the one or more capacitors of the vehicle 10. The capacitor 224 may be connected on a first side to the power line 222 and on a second side to the protective earth connection 206 of the battery charger circuit 200.

As described, the controller 100 is configured to reduce or prevent a current spike from occurring in the battery charger circuit 200 during start up of the battery charger circuit 200. The controller 100 may measure a voltage value on the first side of the relay 220. For example, as is illustrated in FIG. 2C, the battery charger circuit 200 may include a first resistor 226 that is connected on a first side between the incoming alternating current source 202 and the firs side of the relay 220 and connected on a second side to ground. The first resistor 226 may include any suitable resistor and/or resistance value. The controller 100 may be configured to measure a first voltage value at the first resistor 226, before the relay 220 closes.

The battery charger circuit 200 includes a second resistor 228 that is connected on a first side between the second side of the relay 220 and the power line 222 and on a second side to ground. The second resistor 228 may include any suitable resistor and/or resistance value. The controller 100 may be configured to measure a second voltage value at the second resistor 228, before the relay 220 closes. In some embodiments, the controller 100 may determine whether the first voltage value is greater than the second voltage value. When the controller 100 determines that the first voltage value is not greater than the second voltage value, the controller 100 may instruct or allow the relay 220 to close, Power from the incoming alternating current source 202 may then flow to the battery charger circuit 200, which the battery charger circuit 200 uses to charge the respective battery of the vehicle 10.

When the controller 100 determines that the first voltage value is greater than the second voltage value, the controller 100 may determine whether a difference between the first voltage value and the second voltage value is greater than a threshold. The threshold may include a value that indicates that the difference between the first voltage value and the second voltage value may result in a current spike when the relay 220 closes (e.g., the first voltage value is significantly greater than the second voltage value). In some embodiments, the controller 100 omits determining whether the first voltage value is greater than the second voltage value (e.g., and assumes the first voltage value is always equal to or greater than the second voltage value).

When the controller 100 determines that the difference between the first voltage value and the second voltage value is not greater than the threshold, the controller 100 may instruct or allow the relay 220 to close, as described. Conversely, when the controller 100 determines that the difference between the first voltage value and the second voltage value is greater than the threshold, the controller 100 selectively adjusts a voltage value of the capacitor 224. For example, the battery charger circuit 200 includes a low power source 230. The low power source 230 may include any suitable power source and may be shared with other components and/or functions of the vehicle 10, as described. The low power source 230 may be connected on a first side to the power line 222 and connected on a second side to ground. The controller 100 selectively instructs and/or controls the low power source 230. For example, the controller 100 increases the voltage value of the capacitor 224 by providing current and/or voltage from the low power source 230 to the capacitor 224. As described, the capacitor 224 represents all of the capacitors of the vehicle 10. Accordingly, the controller 100 may selectively adjust voltage values of each of the capacitors in order to adjust the voltage value of the capacitor 224.

The controller 100 may increase the voltage value of the capacitor 224, such that the voltage value of the capacitor 224 equals or substantially equals the first voltage value. In this manner, the controller 100 is configured to set the voltage value on the second side of the relay 220 equal or substantially equal to the first voltage value. The controller 100 may instruct or allow the relay 220 to close, in response to the voltage value on the second side of the relay 220 being equal to or substantially equal to the first voltage value.

In some embodiments, the controller 100 may adjust the voltage value of the capacitor 224 (e.g., the voltage value on the second side of the relay 220), such that the voltage value of the capacitor 224 is within a range of the first voltage value that reduces or prevents a current spike from occurring in the battery charger circuit 200 when the relay 220 closed. That is, the voltage value on the second side of the relay 220 may be less than or greater than the first voltage value, within a range that prevents a current spike from occurring within the battery charger circuit 200 when the relay 220 closes.

In some embodiments, controller 100 may perform the methods described herein, such as the method 400. However, the methods described herein as performed by the controller 100 are not meant to be limiting, and any type of software executed on a controller can perform the methods described herein without departing from the scope of this disclosure. For example, any suitable controller, such as a processor executing software within a computing device onboard the vehicle 10, can perform the methods described herein.

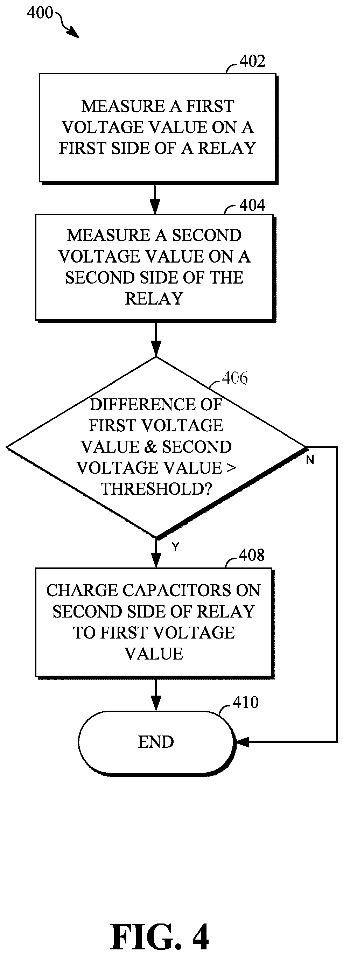

FIG. 4 is a flow diagram generally illustrating a battery charger circuit start up method 400 according to the principles of the present disclosure. At 402, the method 400 measures a first voltage value on a first side of a relay. For example, the controller 100 measures the first voltage value on the first side of the relay 220. The first voltage value corresponds to the voltage value of the incoming alternating current source 202. At 404, the method 400 measures a second voltage value on a second side of the relay. For example, the controller 100 measures the second voltage value on the second side of the relay 220. The second voltage value may correspond to a voltage value of the battery charger circuit 200 before the relay 220 is closed.

At 406, the method 400 determines whether a difference between the first voltage value and the second voltage value is greater than a threshold. For example, the controller 100 determines whether the difference between the first voltage value and the second voltage value is greater than the threshold. When the controller 100 determines that the difference between the first voltage value and the second voltage value is not greater than the threshold, the method 400 ends at 410. When the controller 100 determines that the difference between the first voltage value and the second voltage value is greater than the threshold, the method 400 continues at 408. At 408, the method 400 charges capacitors on the second side of the relay to the first voltage value. For example, the controller 100 may instruct or control the low power source 230 to provide power to the capacitor 224 to charge the capacitor 224, such that the voltage value of the capacitor 224 is equal or substantially equal to the first voltage value. At 410, the method 400 ends. The controller 100 may then instruct or allow the relay 220 to close, which allows the incoming alternating current source 202 to provide power to the battery charger circuit 200. The battery charger circuit 200 may then charge the respective battery of the vehicle 10.

In some embodiments, a method for a battery charger circuit of a vehicle includes measuring a first voltage value on a first side of a relay that is connected to an incoming alternating current source. The method also includes measuring a second voltage value on a second side of the relay that is connected to the battery charger circuit. The method also includes determining whether a difference between the first voltage value and the second voltage value is greater than a threshold. The method also includes, in response to a determination that the difference between the first voltage value and the second voltage value is greater than the threshold, charging one or more capacitors on the second side of the relay.

In some embodiments, the incoming alternating current source includes a three-phase alternating current source. In some embodiments, the incoming alternating current source includes a split-phase alternating current source. In some embodiments, the incoming alternating current source is associated with an alternating current grid. In some embodiments, the relay is one of a plurality of relays. In some embodiments, the relay closes before other relays of the plurality of relays. In some embodiments, charging the one or more capacitors on the second side of the relay includes charging the one or more capacitors on the second side of the rely to a voltage value within a range of the first voltage value.

In some embodiments, an apparatus for a battery charger circuit includes a memory and a processor. The processor is configured to execute instructions stored on the memory to: measure a first voltage value on a first side of a relay that is connected to an incoming alternating current source; measure a second voltage value on a second side of the relay that is connected to the battery charger circuit; determine whether a difference between the first voltage value and the second voltage value is greater than a threshold; and in response to a determination that the difference between the first voltage value and the second voltage value is greater than the threshold, charge one or more capacitors on the second side of the relay.

In some embodiments, the incoming alternating current source includes a three-phase alternating current source. In some embodiments, the incoming alternating current source includes a split-phase alternating current source. In some embodiments, the incoming alternating current source is associated with an alternating current grid. In some embodiments, the relay is one of a plurality of relays. In some embodiments, the relay closes before other relays of the plurality of relays. In some embodiments, the processor is further configured to charge the one or more capacitors on the second side of the relay to a voltage value within a range of the first voltage value.

In some embodiments, a non-transitory computer-readable storage medium includes executable instructions that, when executed by a processor, facilitate performance of operations, comprising: identifying a relay of a plurality of relays that closes first in a battery charger circuit; measuring a first voltage value on a first side of the relay that is connected to an incoming alternating current source; measuring a second voltage value on a second side of the relay that is connected to the battery charger circuit; determining whether a difference between the first voltage value and the second voltage value is greater than a threshold; and in response to a determination that the difference between the first voltage value and the second voltage value is greater than the threshold, charging one or more capacitors on the second side of the relay to a voltage value within a range of the first voltage value.

In some embodiments, the battery charger circuit is associated with a vehicle. In some embodiments, the operations further comprise, in response to the relay closing, providing power from the incoming alternating current source the battery charger circuit. In some embodiments, the incoming alternating current source includes a three-phase alternating current source. In some embodiments, the incoming alternating current source includes a split-phase alternating current source. In some embodiments, the incoming alternating current source is associated with an alternating current grid.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

The word "example" is used herein to mean serving as an example, instance, or illustration. Any aspect or design described herein as "example" is not necessarily to be construed as preferred or advantageous over other aspects or designs. Rather, use of the word "example" is intended to present concepts in a concrete fashion. As used in this application, the term "or" is intended to mean an inclusive "or" rather than an exclusive "or." That is, unless specified otherwise, or clear from context, "X includes A or B" is intended to mean any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form. Moreover, use of the term "an implementation" or "one implementation" throughout is not intended to mean the same embodiment or implementation unless described as such.

Implementations the systems, algorithms, methods, instructions, etc., described herein can be realized in hardware, software, or any combination thereof. The hardware can include, for example, computers, intellectual property (IP) cores, application-specific integrated circuits (ASICs), programmable logic arrays, optical processors, programmable logic controllers, microcode, microcontrollers, servers, microprocessors, digital signal processors, or any other suitable circuit. In the claims, the term "processor" should be understood as encompassing any of the foregoing hardware, either singly or in combination. The terms "signal" and "data" are used interchangeably.

As used herein, the term module can include a packaged functional hardware unit designed for use with other components, a set of instructions executable by a controller (e.g., a processor executing software or firmware), processing circuitry configured to perform a particular function, and a self-contained hardware or software component that interfaces with a larger system. For example, a module can include an application specific integrated circuit (ASIC), a Field Programmable Gate Array (FPGA), a circuit, digital logic circuit, an analog circuit, a combination of discrete circuits, gates, and other types of hardware or combination thereof. In other embodiments, a module can include memory that stores instructions executable by a controller to implement a feature of the module.

Further, in one aspect, for example, systems described herein can be implemented using a general-purpose computer or general-purpose processor with a computer program that, when executed, carries out any of the respective methods, algorithms, and/or instructions described herein. In addition, or alternatively, for example, a special purpose computer/processor can be utilized which can contain other hardware for carrying out any of the methods, algorithms, or instructions described herein.

Further, all or a portion of implementations of the present disclosure can take the form of a computer program product accessible from, for example, a computer-usable or computer-readable medium. A computer-usable or computer-readable medium can be any device that can, for example, tangibly contain, store, communicate, or transport the program for use by or in connection with any processor. The medium can be, for example, an electronic, magnetic, optical, electromagnetic, or a semiconductor device. Other suitable mediums are also available.

The above-described embodiments, implementations, and aspects have been described in order to allow easy understanding of the present invention and do not limit the present invention. On the contrary, the invention is intended to cover various modifications and equivalent arrangements included within the scope of the appended claims, which scope is to be accorded the broadest interpretation to encompass all such modifications and equivalent structure as is permitted under the law.

## Claims

1. A method (400) for a battery charger circuit (200) of a vehicle (10), the method (400) comprising:
measuring (402) a first voltage value on a first side of a relay (220) that is connected to an incoming alternating current source (202);
measuring (404) a second voltage value on a second side of the relay (220) that is connected to the battery charger circuit (200);
determining (406) whether a difference between the first voltage value and the second voltage value is greater than a threshold; and
in response to a determination that the difference between the first voltage value and the second voltage value is greater than the threshold, charging (408) one or more capacitors (224) on the second side of the relay (220).

2. The method (400) of claim 1, wherein the incoming alternating current source (202) includes a three-phase alternating current source (202).

3. The method (400) of claim 1, wherein the incoming alternating current source (202) includes a split-phase alternating current source (202).

4. The method (400) of claim 1, wherein the incoming alternating current source (202) is associated with an alternating current grid.

5. The method (400) of claim 1, wherein the relay (220) is one of a plurality of relays (220).

6. The method (400) of claim 5, wherein the relay (220) closes before other relays (220) of the plurality of relays (220).

7. The method (400) of claim 1, wherein charging the one or more capacitors (224) on the second side of the relay (220) includes charging the one or more capacitors (224) on the second side of the rely to a voltage value within a range of the first voltage value.

8. An apparatus for a battery charger circuit (200), comprising:
a memory; and
a processor configured to execute instructions stored on the memory to:
measure (402) a first voltage value on a first side of a relay (220) that is connected to an incoming alternating current source (202);
measure (404) a second voltage value on a second side of the relay (220) that is connected to the battery charger circuit (200);
determine (406) whether a difference between the first voltage value and the second voltage value is greater than a threshold; and
in response to a determination that the difference between the first voltage value and the second voltage value is greater than the threshold, charge (408) one or more capacitors (224) on the second side of the relay (220).

9. The apparatus of claim 1, wherein the incoming alternating current source (202) includes a three-phase alternating current source (202).

10. The apparatus of claim 8, wherein the incoming alternating current source (202) includes a split-phase alternating current source (202).

11. The apparatus of claim 8, wherein the incoming alternating current source (202) is associated with an alternating current grid.

12. The apparatus of claim 8, wherein the relay (220) is one of a plurality of relays (220).

13. The apparatus of claim 12, wherein the relay (220) closes before other relays (220) of the plurality of relays (220).

14. The apparatus of claim 8, wherein the processor is further configured to charge the one or more capacitors (224) on the second side of the relay (220) to a voltage value within a range of the first voltage value.

15. A non-transitory computer-readable storage medium, comprising executable instructions that, when executed by a processor, facilitate performance of the methods of claims 1 to 7.
